# FASCICULE DE BREVET EUROPEEN

(11) **EP 1 542 441 B1**
(45) Date de publication et mention de la délivrance du brevet: **17.02.2010**
(21) Numéro de dépôt: 04292859.8
(22) Date de dépôt: 02.12.2004
(51) Int. Cl.: H04M 1/725

(54) **Procédé pour basculer entre deux interfaces d'un poste téléphonique**
Method for switching between two interfaces of a telephone
Verfahren zum Schalten zwischen zwei Telefonschnittstellen

(30) Priorité: 12.12.2003 FR 0314566
(43) Date de publication de la demande: 15.06.2005
(73) Titulaire: FRANCE TELECOM, 75015 Paris (FR)
(72) Inventeur: Bertolus, Cédric, 92120 Montrouge (FR); Falletta, Frédéric, 77270 Villeparisis (FR)
(74) Mandataire: Loisel, Bertrand

(56) Documents cités:
- EP-A- 0 792 077
- EP-A- 1 206 102
- US-A1- 2003 078 077
- US-B1- 6 535 749

## Description

L'invention concerne le domaine de la téléphonie et, plus particulièrement, un poste téléphonique ainsi qu'un procédé de contrôle du fonctionnement d'un tel poste, en particulier pour poste de téléphonie mobile.

Les postes téléphoniques permettent actuellement d'accéder aisément, hors communication, à l'ensemble des fonctionnalités proposées par le poste afin, par exemple, de consulter le carnet d'adresses, un service de messagerie ou d'activer certains équipements dont le poste est équipé, tel qu'un appareil de prise de vues, par appui sur une touche spécifique du clavier.

Ces fonctionnalités peuvent être diverses.

Le document EP-A-0 792 077 décrit le passage d'une conversation téléphonique normale à une conversation téléphonique en mode main libre, le type d'interface utilisateur n'étant toutefois pas changé.

Le document EP-A-1 206 102 décrit les sélections par un utilisateur d'une fonction navigateur et d'une fonction courriel « e-mail » à partir de deux touches distinctes du clavier d'un poste téléphonique.

Lorsqu'une communication est établie, l'accès à ces fonctionnalités est moins convivial. En particulier, lorsqu'en cours de communication, on souhaite accéder à une interface du poste pour pouvoir mettre en oeuvre une fonctionnalité du poste autre qu'une fonctionnalité liée à la téléphonie, par exemple pour pouvoir consulter un carnet d'adresses sans mettre fin à la communication, le retour à l'interface de téléphonie est très difficile et nécessite de multiples manipulations.

Le but de l'invention est donc de pallier cet inconvénient et de fournir un poste téléphonique et un procédé de contrôle du fonctionnement d'un tel poste présentant une convivialité accrue et, en particulier, d'usage simplifié.

L'invention a donc pour objet un poste téléphonique comprenant des circuits de téléphonie pour l'établissement d'une liaison téléphonique avec un correspondant, des moyens formant interface homme-machine comportant un écran pour la présentation d'informations à un utilisateur et un clavier pour la saisie de données et d'ordres de commande, et une unité centrale à laquelle sont raccordés les circuits de téléphonie et les moyens formant interface homme-machine.

Les moyens formant interface homme-machine comprennent des moyens pour provoquer, à chaque pression sur la touche, un basculement de l'affichage, en cours de communication, entre une première interface et une deuxième interface, constituant respectivement une interface de gestion des fonctions de téléphonie du poste et une interface visuelle d'accès aux autres fonctionnalités du poste.

Ces moyens sont constitués par une touche du clavier.

Ainsi, grâce à l'utilisation de tels moyens, il est possible de provoquer directement, c'est-à-dire sans autre manipulation, l'affichage d'une interface visuelle de gestion des fonctionnalités du poste et de retourner à l'interface de gestion des fonctions de téléphonie et ce, sans mettre fin à une communication en cours.

On conçoit ainsi que, grâce à la manipulation de cette touche spécifique, l'affichage de l'une ou de l'autre interface de gestion peut être aisément effectué, à la demande de l'utilisateur.

Selon encore une autre caractéristique de l'invention, le poste comporte des moyens de mémorisation pour le stockage de l'interface d'accès aux fonctionnalités du poste après une action sur la touche tendant au basculement de la deuxième interface vers la première interface

La mémorisation de la dernière interface à laquelle l'utilisateur a eu accès, permet de récupérer directement cette interface après l'affichage de l'interface de gestion des fonctions de téléphonie.

L'invention a également pour objet un procédé de contrôle du fonctionnement d'un poste téléphonique tel que défini ci-dessus, **caractérisé en ce qu'**en cours de communication téléphonique, après chaque action sur les moyens pour provoquer un basculement de l'affichage, on bascule l'affichage, en cours de communication, entre une première interface et une deuxième interface, constituant respectivement une interface de gestion des fonctions de téléphonie du poste et une interface visuelle d'accès aux autres fonctionnalités du poste.

Avantageusement, après une action sur la touche tendant au basculement de la deuxième interface vers la première interface, on mémorise la deuxième interface et l'on bascule l'affichage sur la première interface.

Ainsi, après une action sur une touche tendant au basculement de la première interface vers la deuxième interface, on affiche l'interface mémorisée.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est une vue de face d'un poste téléphonique conforme à l'invention ;
- la figure 2 est un schéma synoptique illustrant la structure générale du poste de la figure 1 ; et
- la figure 3 est un organigramme illustrant le fonctionnement du poste des fi gures 1 et 2.

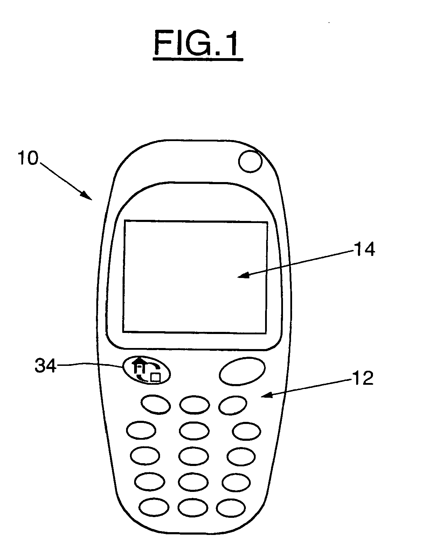

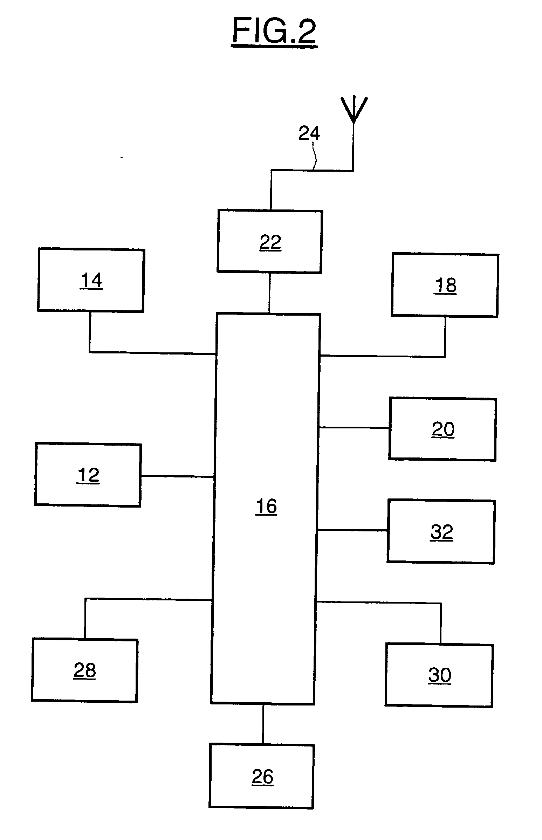

En référence aux figures 1 et 2, on va décrire la structure générale d'un poste téléphonique conforme à l'invention, désigné par la référence numérique générale 10. Bien que la description qui va suivre concerne le fonctionnement d'un poste téléphonique de type mobile, l'invention s'applique également aux postes téléphoniques fixes.

De manière conventionnelle en soi, le poste 10 est pourvu, extérieurement, d'une interface homme-machine comprenant un clavier 12 permettant la saisie de données, par exemple des numéros de téléphone ou des informations destinées à être mémorisées dans un répertoire, ou encore des ordres de commande du fonctionnement du poste 10, et un écran 14 pour la présentation d'informations à l'utilisateur.

En se référant en particulier à la figure 2, le clavier 12 et l'afficheur 14 sont raccordés à une unité centrale 16, de type classique, auxquels sont également raccordés un écouteur 18, un microphone 20, des circuits de téléphonie 22 associés à une antenne 24, servant conjointement à l'établissement d'une liaison téléphonique avec un correspondant appelé, une batterie 26 pour l'alimentation de l'ensemble des éléments actifs du poste 10, ainsi qu'une mémoire 28 fractionnée en zones mémoire pour le stockage de données et de programmes nécessaires au fonctionnement du poste, et de données utiles à l'utilisateur, saisies directement ou téléchargées.

Des dispositifs additionnels, également raccordés à l'unité centrale 16, peuvent également être prévus, tels qu'un vibreur 30 ou un appareil photographique 32, d'autres dispositifs pouvant également être incorporés au poste 10.

En fonctionnement, le poste 10, qui vient d'être décrit, est programmé de manière à présenter à l'utilisateur, sur l'écran 14, un certain nombre d'écrans constituant des interfaces permettant l'accès aux diverses fonctionnalités du poste. Ces écrans peuvent être accessibles soit en cours de communication, soit hors communication. Parmi les écrans ou interfaces susceptibles d'être affichés, le poste 10 permet de présenter à l'utilisateur un écran d'accueil qui présente à l'utilisateur l'état de fonctionnement du téléphone, un écran de gestion des fonctionnalités de téléphonie du poste, qui représente l'état des circuits de téléphonie du poste ou l'état dans lequel l'utilisateur les a laissés, un écran de gestion des services proposés par le poste autres que les services liés à la téléphonie et, comme cela sera détaillé par la suite, un écran mémorisé.

Par exemple, hors communication, l'écran d'accueil est affiché afin de fournir à l'utilisateur une indication sur le fonctionnement du poste, en ce qui concerne les fonctions de téléphonie et les services. En communication, l'écran de gestion des fonctionnalités de téléphonie est généralement affiché.

De manière générale, l'unité centrale 16 peut, en réponse à des ordres de commande provenant du clavier 12, provoquer l'affichage sur l'écran 14 d'une première interface de gestion des fonctions de téléphonie du poste permettant, notamment, l'établissement d'une communication et, de manière générale, l'accès à tout service lié à la téléphonie. Une deuxième interface permettant de gérer les autres fonctions du téléphone, c'est-à-dire les fonctionnalités du téléphone autres que celles liées à la téléphonie, telles que les fonctionnalités de messagerie, de carnet d'adresses, de mise en oeuvre de l'appareil photographique 32, ..., peut également être affichée sur l'écran 14, sous le contrôle de l'unité centrale 16.

Conformément à une caractéristique de l'invention, le clavier 12 est pourvu d'une touche spécifique, désignée par la référence numérique générale 34, permettant, en cours de communication, d'accéder à l'une ou l'autre des interfaces. En particulier, cette touche spécifique est prévue pour accéder à la deuxième interface, par exemple pour consulter le répertoire du poste, la messagerie ou mettre en oeuvre l'appareil photographique 32, et ce, en cours de communication et sans quitter cette communication, et pour pouvoir directement retourner à la première interface.

Pour ce faire, l'unité centrale 16 est dûment programmée de sorte qu'en réponse à une unique action sur cette touche 34, la deuxième interface soit directement présentée à l'utilisateur afin de lui permettre d'accéder aux fonctionnalités qu'il désire, et qu'une autre action sur cette touche 34 permette directement de retourner à la première interface de gestion des fonctions de téléphonie du poste.

On notera que, de préférence, lorsqu'une action sur la touche 34 est effectuée de manière à passer de la deuxième interface vers la première interface, la deuxième interface, telle qu'elle a été manipulée par l'utilisateur, est mémorisée dans la mémoire 28, de manière à pouvoir la récupérer juste après une action ultérieure sur la touche 34. Ainsi, par exemple, en cours de communication, il est possible d'accéder à un service particulier, puis de retourner à l'écran de gestion des fonctionnalités de téléphonie, puis de retourner à l'écran de gestion des services du poste, dans l'état dans lequel il a été laissé par l'utilisateur lors de la dernière manipulation.

On va maintenant décrire de manière détaillée le fonctionnement du poste 10 qui vient d'être décrit et, en particulier, la procédure d'accès aux différentes interfaces disponibles. La procédure décrite ci-dessous est mise en oeuvre à chaque action sur la touche 34.

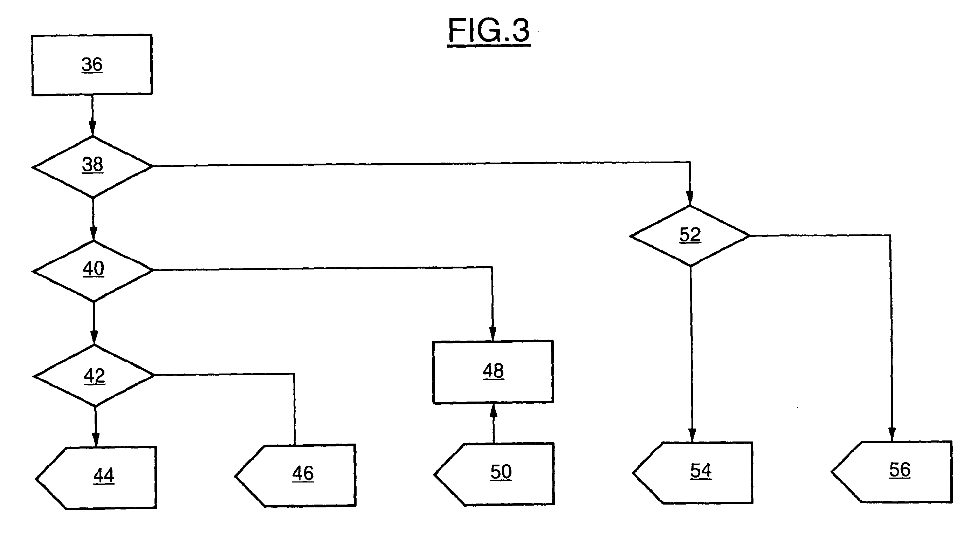

Comme on le voit sur la figure 3, cette procédure débute par une première étape 36 qui correspond à une action sur la touche 34 du clavier 12. L'unité centrale 16 surveille l'activité du poste afin de détecter si une communication est en cours (étape 38). Si tel est le cas, si la première interface est affichée (étape 40) et si aucun écran n'a été mémorisé (étape 42), il est procédé à l'affichage de la deuxième interface de gestion des services des postes téléphoniques 10. L'utilisateur peut alors naviguer dans les différents services du téléphone (carnet d'adresses, messagerie, appareil photo, ...), tout en conversant avec son interlocuteur grâce, par exemple, à l'utilisation d'une fonction main libre ou d'une oreillette.

On notera que, si au cours de l'étape 42 précédente, il a été détecté qu'une interface de visualisation a été mémorisée, cette interface est affichée afin de récupérer la dernière interface de gestion de service manipulée par l'utilisateur (étape 46).

Dans le cas où, lors de l'étape 40 précédente, il a été détecté qu'une deuxième interface ou interface de gestion des services est affichée, l'unité centrale provoque une mémorisation de l'écran affiché (étape 48). La première interface de gestion des fonctions de téléphonie est alors affichée (étape 50).

Enfin, dans le cas où, lors de l'étape 38 précédente, il a été constaté qu'aucune communication n'est établie, lors de l'étape 52 suivante, l'unité centrale 16 analyse l'état de fonctionnement du poste afin de détecter le type d'interface affichée. Dans le cas où un écran d'accueil est affiché (étape 52), lors de l'étape 54 suivante, on affiche l'interface gestionnaire de service. Dans le cas contraire, on affiche l'interface d'accueil (étape 56).

On notera que la mémorisation de la deuxième interface réalisée lors de l'étape 48 permet une récupération de cette interface lors d'une action ultérieure sur la touche tendant à basculer l'affichage de la première interface vers la deuxième interface.

On notera cependant que chaque interface mémorisée est réinitialisée avant ou après la mise en communication, afin d'éviter à l'utilisateur une étape contraignante d'effacement de cette interface en cours de communication.

## Revendications

1. Poste téléphonique, comprenant des circuits de téléphonie (22) pour l'établissement d'une liaison téléphonique avec un correspondant, des moyens formant interface homme-machine comportant un écran (14) pour la présentation d'informations à un utilisateur et un clavier (12) pour la saisie de données et d'ordres de commande, et une unité centrale (16) à laquelle sont raccordés les circuits de téléphonie (22) et les moyens formant interface homme-machine (12, 14), les moyens formant interface homme-machine comprenant des moyens (34) pour provoquer, à chaque pression sur la touche, un basculement de l'affichage, en cours de communication, entre une première interface et une deuxième interface, constituant respectivement une interface de gestion des fonctions de téléphonie du poste et une interface visuelle d'accès aux autres fonctionnalités du poste, **caractérisé en ce que** lesdits moyens pour provoquer le basculement de l'affichage sur l'écran d'une interface visuelle d'accès aux fonctionnalités du poste sont constitués par une touche (34) du clavier (12), permettant en cours de communication, et sans quitter cette communication, d'accéder à l'une où l'autre des Interfaces.

2. Poste selon la revendication 1, **caractérisé en ce qu'**il comporte des moyens de mémorisation (28) pour le stockage de l'interface d'accès aux fonctionnalités du poste après une action sur la touche tendant au basculement de la deuxième interface vers la première interface.

3. Procédé de contrôle du fonctionnement d'un poste téléphonique, ce poste téléphonique comprenant des circuits de téléphonie (22) pour l'établissement d'une liaison téléphonique avec un correspondant, des moyens formant interface homme-machine comportant un écran (14) pour la présentation d'informations à un utilisateur et un clavier (12) pour la saisie de données et d'ordres de commande, et une unité centrale (16) à laquelle sont raccordés les circuits de téléphonie (22) et les moyens formant interface homme-machine (12, 14), les moyens formant interface homme-machine comprenant des moyens (34) pour provoquer, à chaque pression sur la touche, un basculement de l'affichage, en cours de communication, entre une première interface et une deuxième interface, constituant respectivement une interface de gestion des fonctions de téléphonie du poste et une interface visuelle d'accès aux autres fonctionnalités du poste, **caractérisé en ce que** lesdits moyens pour provoquer la basculement de l'affichage sur l'écran d'une Interface visuelle d'accès aux fonctionnalités du poste sont constitués par une touche (34) du clavier (12), permettant en cours de communication, et sans quitter cette communication, d'accéder à l'une où l'autre des interfaces, **caractérisé en ce qu'**en cours de communication téléphonique, après chaque action sur les moyens (34) pour provoquer un basculement de l'affichage, on bascule l'affichage, en cours de communication, entre une première interface et une deuxième Interface, constituant respectivement une interface de gestion des fonctions de téléphonie du poste et une interface visuelle d'accès aux autres fonctionnalités du poste.

4. Procédé selon la revendication 3, **caractérisé en ce qu'**après une action sur la touche tendant au basculement de la deuxième interface vers la première interface, on mémorise la deuxième interface et l'on bascule l'affichage sur la première interface.

5. Procédé selon la revendication 4, **caractérisé en ce qu'**après une action sur une touche tendant au basculement de la première interface vers la deuxième interface, on affiche l'interface mémorisée.

## Claims

1. Telephone set, comprising telephony circuits (22) for establishing a telephone link with an opposite party, means forming man-machine interface comprising a screen (14) for presenting information to a user and a keyboard (12) for entering data and control commands, and a central unit (16) to which are hooked up the telephony circuits (22) and the means forming man-machine interface (12, 14), the means forming man-machine interface comprising means (34) for causing, with each press of the key, a switching of the display, during communication, between a first interface and a second interface, constituting respectively an interface for managing the telephony functions of the set and a visual interface for accessing the other functionalities of the set, **characterized in that** said means for causing the switching of the display on the screen of a visual interface for accessing the functionalities of the set consist of a key (34) of the keyboard (12), making it possible during communication, and without quitting this communication, to access one or the other of the interfaces.

2. Set according to Claim 1, **characterized in that** it comprises storage means (28) for storing the interface for accessing the functionalities of the set after an action on the key tending to the switching from the second interface to the first interface.

3. Method of monitoring the operation of a telephone set, this set comprising telephony circuits (22) for establishing a telephone link with an opposite party, means forming man-machine interface comprising a screen (14) for presenting information to a user and a keyboard (12) for entering data and control commands, and a central unit (16) to which are hooked up the telephony circuits (22) and the means forming man-machine interface (12, 14), the means forming man-machine interface comprising means (34) for causing, with each press of the key, a switching of the display, during communication, between a first interface and a second interface, constituting respectively an interface for managing the telephony functions of the set and a visual interface for accessing the other functionalities of the set, **characterized in that** said means for causing the switching of the display on the screen of a visual interface for accessing the functionalities of the set consist of a key (34) of the keyboard (12), making it possible during communication, and without quitting this communication, to access one or the other of the interfaces, **characterized in that** during telephonic communication, after each action on the means (34) for causing a switching of the display, the display is switched, during communication, between a first interface and a second interface, constituting respectively an interface for managing the telephony functions of the set and a visual interface for accessing the other functionalities of the set.

4. Method according to Claim 3, **characterized in that** after an action on the key tending to the switching from the second interface to the first interface, the second interface is stored and the display is switched to the first interface.

5. Method according to Claim 4, **characterized in that** after an action on a key tending to the switching from the first interface to the second interface, the stored interface is displayed.

## Patentansprüche

1. Telefonapparat, der Telefonschaltungen (22) für den Aufbau einer Telefonverbindung mit einem Teilnehmer, eine Mensch-Maschine-Schnittstelle bildende Einrichtungen, die einen Bildschirm (14) zur Anzeige von Informationen für einen Nutzer und eine Tastatur (12) zur Eingabe von Daten und Steuerbefehlen aufweisen, und eine Zentraleinheit (16) enthält, an die die Telefonschaltungen (22) und die eine Mensch-Maschine-Schnittstelle (12, 14) bildenden Einrichtungen angeschlossen sind, wobei die eine Mensch-Maschine-Schnittstelle bildenden Einrichtungen Einrichtungen (34) aufweisen, um während des Gesprächs bei jedem Druck auf die Taste ein Umschalten der Anzeige zwischen einer ersten Schnittstelle und einer zweiten Schnittstelle zu bewirken, die eine Verwaltungsschnittstelle der Telefonfunktionen des Apparats bzw. eine visuelle Zugriffsschnittstelle auf die anderen Funktionalitäten des Apparats bilden, **dadurch gekennzeichnet, dass** die Einrichtungen, um das Umschalten der Bildschirm-Anzeige einer visuellen Zugriffsschnittstelle auf die Funktionalitäten des Apparats zu bewirken, aus einer Taste (34) der Tastatur (12) bestehen, die es während des Gesprächs und ohne dieses Gespräch zu verlassen ermöglichen, auf die eine oder die anderen der Schnittstellen zuzugreifen.

2. Apparat nach Anspruch 1, **dadurch gekennzeichnet, dass** er Speichereinrichtungen (28) zum Speichern der Zugriffsschnittstelle auf die Funktionalitäten des Apparats nach einer Betätigung der Taste aufweist, die das Umschalten von der zweiten Schnittstelle zur ersten Schnittstelle bezweckt.

3. Verfahren zur Überwachung des Betriebs eines Telefonapparats, wobei dieser Telefonapparat Telefonschaltungen (22) für den Aufbau einer Telefonverbindung mit einem Teilnehmer, eine Mensch-Maschine-Schnittstelle bildende Einrichtungen, die einen Bildschirm (14) zur Anzeige von Informationen für einen Benutzer und eine Tastatur (12) zur Eingabe von Daten und von Steuerbefehlen aufweisen, und eine Zentraleinheit (16) enthält, an die die Telefonschaltungen (22) und die eine Mensch-Maschine-Schnittstelle bildenden Einrichtungen (12, 14) angeschlossen sind, wobei die eine Mensch-Maschine-Schnittstelle bildenden Einrichtungen Einrichtungen (34) enthalten, um bei jedem Druck auf die Taste während des Gesprächs ein Umschalten der Anzeige zwischen einer ersten Schnittstelle und einer zweiten Schnittstelle zu bewirken, die eine Verwaltungsschnittstelle der Telefonfunktionen des Apparats bzw. eine visuelle Zugriffsschnittstelle auf die anderen Funktionalitäten des Apparats bilden, **dadurch gekennzeichnet, dass** die Einrichtungen, um das Umschalten der Bildschirm-Anzeige einer visuellen Zugriffsschnittstelle auf die Funktionalitäten des Apparats zu bewirken, aus einer Taste (34) der Tastatur (12) bestehen, die es während des Gesprächs und ohne das Gespräch zu verlassen erlaubt, auf die eine oder die andere der Schnittstellen zuzugreifen, **dadurch gekennzeichnet, dass** während eines Telefongesprächs nach jeder Betätigung der Einrichtungen (34), um ein Umschalten der Anzeige zu bewirken, die Anzeige während des Gesprächs zwischen einer ersten Schnittstelle und einer zweiten Schnittstelle umgeschaltet wird, die eine Verwaltungsschnittstelle der Telefonfunktionen des Apparats bzw. eine visuelle Zugriffsschnittstelle auf die anderen Funktionalitäten des Apparats bilden.

4. Verfahren nach Anspruch 3, **dadurch gekennzeichnet, dass** nach einer Betätigung der Taste, die das Umschalten von der zweiten Schnittstelle zur ersten Schnittstelle bezweckt, die zweite Schnittstelle gespeichert wird und die Anzeige auf die erste Schnittstelle umgeschaltet wird.

5. Verfahren nach Anspruch 4, **dadurch gekennzeichnet, dass** nach einer Betätigung einer Taste, die das Umschalten von der ersten Schnittstelle zur zweiten Schnittstelle bezweckt, die gespeicherte Schnittstelle angezeigt wird.
